# EUROPÄISCHE PATENTSCHRIFT

(11) **EP 1 833 883 B1**
(45) Veröffentlichungstag und Bekanntmachung des Hinweises auf die Patenterteilung: **26.03.2008**
(21) Anmeldenummer: 05815676.1
(22) Anmeldetag: 24.11.2005
(51) Int. Cl.: C08J 3/12, B29B 9/00, C08L 83/04

(54) **VERFAHREN ZUR HERSTELLUNG VON GRANULATEN VON THERMOPLASTISCHEN SILOXANPOLYMEREN**
METHOD FOR PRODUCING GRANULES FROM THERMOPLASTIC SILOXANE POLYMERS
PROCEDE POUR PRODUIRE DES GRANULES DE POLYMERES DE SILOXANE THERMOPLASTIQUES

(30) Priorität: 23.12.2004 DE 102004062354
(43) Veröffentlichungstag der Anmeldung: 19.09.2007
(73) Patentinhaber: Wacker Chemie AG, 81737 München (DE)
(72) Erfinder: SELBERTINGER, Ernst, 84489 Burghausen (DE); SCHÄFER, Oliver, 84489 Burghausen (DE)
(74) Vertreter: Deffner-Lehner, Maria
(86) Internationale Anmeldenummer: PCT/EP2005/012584
(87) Internationale Veröffentlichungsnummer: WO 2006/072286

(56) Entgegenhaltungen:
- WO-A-96/34029
- DE-B3- 10 316 521
- DE-U1-0202004 008 23
- DATABASE WPI Section Ch, Week 200405 Derwent Publications Ltd., London, GB; Class A31, AN 2001-086233 XP002390055 & JP 03 483499 B2 (JAPAN STEEL WORKS LTD) 6. Januar 2004 (2004-01-06)

## Beschreibung

Die Erfindung betrifft ein Verfahren zur Herstellung von Granulaten von thermoplastischen Siloxanpolymeren, insbesondere Organopolysiloxan/Polyharnstoff/Polyurethan-Blockcopolymere.

Die Herstellung von thermoplastischen Siloxanen ist in I. Yilgör, Polymer, 1984 (25), 1800 und in EP-A-250248 beschrieben. Die Umsetzung der Polymerbausteine erfolgt letztlich nach einer vergleichsweise einfachen Polyaddition, wie sie für die Herstellung von Polyurethanen angewendet wird. Dabei werden als Ausgangsmaterialien für die Siloxan-Harnstoff-Copolymere als Siloxanbausteine bisaminoalkyl-terminierte Polysiloxane verwendet. Diese bilden die Weichsegmente in den Copolymeren, analog zu den Polyethern in reinen Polyurethansystemen. Als Hartsegmente werden gängige Diisocyanate eingesetzt, wobei diese auch noch durch Zusatz von Diaminen, wie z.B. 1,6-Diaminohexan oder Dihydroxyverbindungen wie z.B. Butandiol zur Erreichung höherer Festigkeiten modifiziert werden können. Die Umsetzung der Bisaminoverbindungen mit Isocyanaten erfolgt dabei spontan und benötigt in aller Regel keinen Katalysator.
Die Silicon- und Isocyanat-Polymerbausteine sind in einem weiten Bereich problemlos mischbar. Die mechanischen Eigenschaften werden durch das Verhältnis der unterschiedlichen Polymerblöcke Silicon-Weichsegmente und Harnstoff-Hartsegmente und wesentlich durch das verwendete Diisocyanat bestimmt. Durch die starken Wechselwirkungen der Wasserstoffbrücken zwischen den Harnstoffeinheiten besitzen diese Verbindungen einen definierten Erweichungspunkt und es werden thermoplastische Materialien erhalten.

In WO 96/34029 (korrespondierende EP 822951 B1) wird dabei die kontinuierliche Extrusion von Siloxan-Harnstoff-Blockcopolymeren zur Darstellung abhäsiver Schichten beschrieben, sowie die Verwendung dieser Materialien in Extrusionsanwendungen. In WO 96/34029 wird die Aufarbeitung der durch reaktive Extrusion gewonnenen Materialien durch Stranggranulieren beschrieben, um so Polymergranulate zu bekommen. Solche Granulate sind von anderen thermoplastischen Kunststoffen bekannt und bilden die Möglichkeit, feste Materialien quasi wie Flüssigkeiten zu fördern und sind somit die Grundlage aller thermoplastischen Verarbeitungsstufen. Die Herstellung eines Granulates ist daher unabdingbare Voraussetzung für die Verwendung eines Materials in Spritzgussanwendungen, da es sich bei einer Spritzgussanwendung um einen getakteten Prozess, d.h. im Gegensatz zur Extrusion, um einen nicht kontinuierlichen Prozess handelt. Das Granulat spielt dabei das Bindeglied zwischen kontinuierlicher Herstellung und nicht-kontinuierlicher Verarbeitung. Die Verbindung zwischen Herstellung und Verarbeitung wird daher für gewöhnlich über die kontinuierliche Herstellung von Pellets bzw. Kunststoffgranulat gelöst, welches anschließend sowohl kontinuierlich als auch diskontinuierlich verarbeitet werden kann. Zur Herstellung und Verarbeitung von Kunststoffgranulaten benötigt man jedoch bestimmte Voraussetzungen. Die kontinuierliche Polymerherstellung darf nur zu sehr geringen Schwankungen in der Schmelzviskosität des Polymeren führen, da diese die Dicke des extrudierten Stranges bestimmt und so die Homogenität als auch die Granulierung des Polymerstranges bestimmt, da Stränge unterschiedlicher Dicke zum Blockieren der Granulierungseinrichtung führen können. Weiterhin dürfen die Polymerpellets nach dem Granulieren nicht aneinander haften, d.h ein sog. "Blocken" des Materials ist zu verhindern. Zur Ausbildung eines stabilen Polymerstranges ist ebenfalls eine Mindestschmelzviskosität anzustreben, da ansonsten keine selbsttragenden, stabilen Polymerstränge erhalten werden können, was zum Abreißen des Polymerstranges führt und somit die Granulierung unterbricht.
Bei Verwendung einer Stranggranulierungsanlage, wie zum Teil in WO 96/34029 eingesetzt, wird das gebildete Polymer als Strang extrudiert, der extrudierte Strang anschließend in ein Wasserbad geführt und dort eine längere Strecke unter Wasser zur Abkühlung gebracht. Danach wird der Strang aus dem Wasserbad herausgeführt, ggf. von anhaftendem Wasser befreit und anschließend mit einem rotierendem Messer bzw. einer Messerwalze granuliert. Wegen der schlechten Wärmeleitfähigkeit des Siloxanpolymers muss die Verweilzeit des Siloxanstranges im Wasserbad länger sein als bei anderen Thermoplasten, um die notwendige Abkühlung zu erreichen. Falls sich im Wasserbad das Siloxanpolymer wegen seiner geringen Wärmeleitfähigkeit nicht bis zum Kern ausreichend abkühlt, dann kleben die nach dem Granulieren im Stranggranulator entstehenden zylindrischen Granulate an den Stirnflächen durch die noch vorhandene Restwärme zusammen, was zu einem nicht mehr rieselfähigen und nicht weiterverarbeitbaren Granulat führt.
Der gleiche Effekt tritt bei der Lagerung solcher Granulate in warmer Umgebung ein, wie sie in warmen Ländern oder im Sommer herrschen: Zylindrische (Strang-)Granulate neigen dabei wegen der glatten Schnittflächen schneller zum Zusammenkleben und zur Verblockung als sphärische Granulate.

Zylinderförmige Granulate haben auch den Nachteil, dass sie aufgrund ihrer kantigeren Geometrie nicht so gut rieselfähig sind wie sphärische Granulate. Dieser Effekt tritt noch verstärkt auf bei weichen Materialien mit niedrigen Shore-Härten. Bei der Weiterverarbeitung in üblichen Kunststoffverarbeitungsmaschinen ist eine gute Rieselfähigkeit jedoch unbedingt notwendig, um in der Dosierung einen konstanten, gleichmäßigen Granulat-Einzug zu erhalten.

Ein weiterer Nachteil der Strang-Granulierung ist, dass bestimmte Polymere mit für ihr spezielles Einsatzgebiet maßgeschneiderten Eigenschaften nicht oder nur unter sehr ungünstigen Bedingungen strang-granuliert werden können. Dies trifft insbesondere für einige Siloxan-Harnstoff-Blockcopolymere zu. Diese speziellen Copolymere werden durch Einsatz von bestimmten Diisocyanaten wie z.B. Tetramethyl-m-xylol-diisocyanat hergestellt. Sie besitzen u.a. eine sehr niedrige Schmelzviskosität, wodurch sie ideal für die Spritzgussherstellung auch sehr dünnwandiger filigraner Artikel geeignet sind.
Darüber hinaus haben diese Copolymere einen sehr engen Schmelzbereich von ca. 160 -170 °C und damit ein für die herkömmliche Strangextrusion und -Granulierung äußerst enges Temperaturfenster. Knapp unterhalb der Schmelztemperatur wird das Material schlagartig fest, darüber ist es eine niedrigviskose Flüssigkeit. Dies macht die Herstellung im Stranggranulierungsverfahren sehr schwierig, da man dabei die Extrusionstemperaturen sehr genau einhalten muss.

Es bestand die Aufgabe, ein Verfahren zur Herstellung von Granulaten von thermoplastischen Siloxanpolymeren, insbesondere Organopolysiloxan/Polyharnstoff/Polyurethan-Blockcopolymeren, bereitzustellen, bei dem die oben beschriebenen Nachteile vermieden werden. Weiterhin bestand die Aufgabe, ein Verfahren zur Herstellung von Granulaten von thermoplastischen Siloxanpolymeren, insbesondere Organopolysiloxan/Polyharnstoff/Polyurethan-Blockcopolymeren, bereitzustellen, bei dem Polymere mit unterschiedlichen Schmelzviskositäten in granulierter Form erhalten werden können und bei dem das Blocken der Polymerpellets verhindert wird.

Gegenstand der Erfindung ist ein Verfahren zur Herstellung von Granulaten von thermoplastischen Siloxanpolymeren, insbesondere Organopolysiloxan/Polyharnstoff/Polyurethan-Blockcopolymeren, durch
(d) Transportieren des thermoplastischen Siloxanpolymeren, insbesondere Organopolysiloxan/Polyharnstoff/Polyurethan-Blockcopolymeren, in das gegebenenfalls zuvor zusätzliche Additive eingemischt wurden, aus dem Reaktor in ein Kühlmedium mit einer Temperatur von -20 bis 60°C und
(e) direkte Granulierung und Pelletierung des Polymers in dem Kühlmedium, gleichzeitig während oder unmittelbar nachdem das Polymer in das Kühlmedium eintritt.

Vorzugsweise werden Granulate von thermoplastischen Siloxanpolymeren hergestellt durch
(a) Zuführen der für die Herstellung von thermoplastischen Siloxanpolymeren erforderlichen Reaktanten zu einem Reaktor,
(b) Mischen der Reaktanten in dem Reaktor
(c) Ermöglichen der Reaktion der Reaktanten, um ein thermoplastisches Siloxanpolymer zu bilden
(d) Transportieren des Polymers aus dem Reaktor in ein Kühlmedium mit einer Temperatur von -20 bis 60°C
(e) direkte Granulierung und Pelletierung des Polymers in dem Kühlmedium, gleichzeitig während oder unmittelbar nachdem das Polymer in das Kühlmedium eintritt.

Bevorzugt werden Granulate von Organopolysiloxan/Polyharnstoff/Polyurethan-Blockcopolymeren hergestellt durch
(a) Zuführen der der für die Herstellung von thermoplastischen Siloxanpolymeren erforderlichen Reaktanten zu einem Reaktor, wobei die Reaktanten umfassen mindestens ein Polyisocyanat und mindestens ein Polyamin, wobei mindestens ein Polyamin ein Polydiorganosiloxandiamin ist,
(b) Mischen der Reaktanten in dem Reaktor
(c) Ermöglichen der Reaktion der Reaktanten, um ein Organopolysiloxan/Polyharnstoff/Polyurethan-Blockcopolymer zu bilden
(d) Transportieren des Polymers aus dem Reaktor in ein Kühlmedium mit einer Temperatur von -20 bis 60°C und
(e) direkte Granulierung und Pelletierung des Polymers in dem Kühlmedium, unmittelbar nachdem das Polymer in das Kühlmedium eintritt.

An den Verfahrensschritt (e) schließen sich vorzugsweise folgende Schritte an:
(f) Abkühlung des Granulats in dem Kühlmedium
(g) Trennung des Granulats vom Kühlmedium und
(h) Trocknung des Granulats.

Das im Reaktor gebildete Polymer liegt vorzugsweise als Schmelze vor und wird daher im Verfahrensschritt (d) als Schmelze transportiert und im Verfahrensschritt (e) aus der Schmelze granuliert.

Vorzugsweise wird das Polymer aus dem Reaktor in ein Kühlmedium extrudiert und direkt in dem Kühlmedium erfolgt ohne wesentliche Ausbildung eines Stranges eine Granulierung und Pelletierung des Polymers.
Die Ausbildung eines Stranges bedeutet hierbei, dass die Länge des Strangs wesentlich größer als die Dicke, d.h. der Durchmesser, des Strangs ist. Unter ohne wesentliche Ausbildung eines Stranges ist daher zu verstehen, dass die Länge des Strangs nicht wesentlich größerer als dessen Durchmesser ist.

Das erfindungsgemäße Verfahren kann kontinuierlich, halbkontinuierlich oder diskontinuierlich durchgeführt werden. Vorzugsweise wird es kontinuierlich durchgeführt. Die Verfahrensschritte (a) bis (h) werden daher vorzugsweise kontinuierlich durchgeführt.

Bevorzugt ist daher ein kontinuierliches Verfahren zur Herstellung von Granulaten von thermoplastischen Siloxanpolymeren durch
(d) kontinuierliches Transportieren des thermoplastischen Siloxanpolymeren aus dem Reaktor in ein Kühlmedium mit einer Temperatur von -20 bis 60°C und
(e) kontinuierliche direkte Granulierung und Pelletierung des Polymers in dem Kühlmedium, gleichzeitig während oder unmittelbar nachdem das Polymer in das Kühlmedium eintritt.

Daran schließt sich bevorzugt an eine
(f) kontinuierliche Abkühlung des Granulats in dem Kühlmedium
(g) kontinuierliche Trennung des Granulats vom Kühlmedium und eine
(h) kontinuierliche Trocknung des Granulats.

Das kontinuierliche Verfahren hat dabei den Vorteil, dass nicht nur das Granulat kontinuierlich ausgeschleust und getrocknet wird, sondern dass das Kühlmedium nach der Abtrennung des Granulats zurückgeführt wird, wobei ein Kühlkreislauf entsteht.

Bevorzugt werden daher beim kontinuierlichen Verfahren im Verfahrensschritt (a) die für die Herstellung von thermoplastischen Siloxanpolymeren erforderlichen Reaktanten kontinuierlich zu einem Reaktor zugeführt.

Das erfindungsgemäße Verfahren hat weiterhin den Vorteil, dass kugelförmige Granulate bzw. annähernd kugelförmige Granulate erhalten werden, die eine gute Rieselfähigkeit aufweisen.

Die nach dem erfindungsgemäßen Verfahren hergestellten Granulate weisen eine Korngröße von vorzugsweise 0,3 bis 10 mm, bevorzugt 2 bis 5 mm auf.

Beispiele für Kühlmedien sind Wasser, Wasser/Eis-Gemische, Mischungen aus Wasser und wasserlöslichen anorganischen und/oder organischen Zusätzen wie z.B. Kochsalz, Kieselsol, Alkohole, Di- und Tri-Glykole, Polyglykole, Polyetherglykole, Polyvinylalkohole, Polyacrylate, Polyphosphate.
Des weiteren können die Kühlmedien aus reinen anorganischen und/oder organischen Flüssigkeiten bestehen, in denen das Copolymer kaum oder nicht löslich ist, wie z.B. Silane, AK-Öle, Polyglykole, Methanol.
Die Kühlmedien können Additive enthalten, die die Eigenschaften des Granulats verbessern, wie z.B. Kieselsol als Rieselhilfsmittel und/oder als Füllstoff.
Vorzugsweise ist das Kühlmedium Wasser oder ein Wasser/Eis-Gemisch.

Die Temperatur des Kühlmediums beträgt vorzugsweise 0°C bis 35°C.

Bevorzugt handelt es sich bei dem Schritt (d) bis (h) um eine sogenannte Unterwassergranulierung, bei der der Abkühlprozess und der Granulierungsprozess an der Extruderdüse ablaufen und dadurch Granulate von thermoplastischen Elastomeren in hervorragend rieselfähiger Form erhalten werden, welche zudem durch ihre kugelförmige Gestalt blockfrei sind und auch bei längerer Lagerung in warmer Umgebung rieselfähig bleiben, wodurch weiterhin auch thermoplastische Siloxanpolymere mit einer sehr niedrigen Schmelzviskosität und sehr niedrigen Shore-Härten verarbeitet werden können. Ein weiterer Vorteil des erfindungsgemäßen Verfahrens ist, dass bei dieser Art der Granulierung kein stabiler Strang benötigt wird, da hier die Polymerschmelze sofort nach dem Austritt aus der Extruderdüse durch ein rotierendes Messer abgeschert wird, wobei das Messer gleichzeitig in einem Wasserbad rotiert, so dass der abgeschnittene Polymerpartikel sofort rundherum von Kühlmedium umschlossen wird, also besonders effektiv gekühlt werden kann und somit der Verbleib von warmen, nichtklebfreien Flächen am Granulatkorn verhindert wird.

Die gegebenenfalls durchgeführte Trennung des Granulates vom Kühlmedium kann beispielsweise in Zentrifugen, Zyklonen oder Sieben und die gegebenenfalls durchgeführte Trocknung des Granulates kann beispielsweise in Trocknungszentrifugen, in luftdurchströmten (Rüttel-)Sieben oder Zyklonen erfolgen.

Beispiele für Reaktoren, in denen die Polyaddition stattfinden kann, sind:
• diskontinuierliche oder kontinuierliche Kneter, bevorzugt Ein- oder Zweiwellenkneter (Extruder, BUSS-Kneter, List-Kneter u.ä.),
• sowie diskontinuierliche dynamische Mischer, z.B. Rotor-Stator-Mischer, Schaufelkneter o.ä.
Die Temperatur in dem Reaktor sollte ausreichend für die Reaktion zwischen den Reaktanten und ausreichend für das Transportieren des gebildeten Polymers sein. Die Reaktor-Temperatur beträgt daher vorzugsweise zwischen 60°C bis 240°C, bevorzugt zwischen 80°C bis 200°C.

Bevorzugt als Organopolysiloxan/Polyharnstoff/Polyurethan-Blockcopolymere sind solche enthaltend Einheiten der allgemeinen Formel (1) 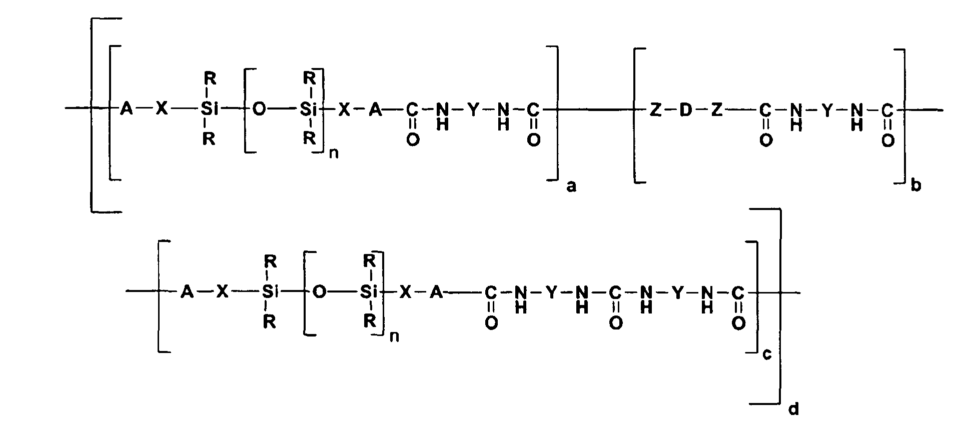 wobei
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können,
- **A**: ein Sauerstoffatom oder eine Aminogruppe -NR'-,
- **Z**: ein Sauerstoffatom oder eine Aminogruppe -NR'-,
- **R'**: Wasserstoff oder einen Alkylrest mit 1 bis 10 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **D**: einen gegebenenfalls durch Fluor, Chlor, C₁-C₆-Alkyl- oder C₁-C₆-Alkylester substituierten Alkylenrest mit 1 bis 800 Kohlenstoffatomen, in dem einander nicht benachbarte Methyleneinheiten durch Gruppen -O-, -COO-, -OCO-, oder -OCOO-, ersetzt sein können,
- **n**: eine Zahl von 1 bis 4000,
- **a**: eine Zahl von mindestens 1,
- **b**: eine Zahl von 0 bis 40,
- **c**: eine Zahl von 0 bis 30 und
- **d**: eine Zahl größer 0 bedeuten.

Organopolysiloxan/Polyharnstoff/Polyurethan-Blockcopolymere und Verfahren zu seiner Herstellung sind in der DE 10137855 A, DE 10313936 A, DE 10313938 A und DE 10326575 A beschrieben und die DE 10137855 A, DE 10313936 A, DE 10313938 A und DE 10326575 A gehören daher zum Inhalt der Offenbarung der Anmeldung.

Vorzugsweise bedeutet **R** einen einwertigen, Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 1 bis 10 Kohlenstoffatomen. Vorzugsweise ist der Alkylen-Rest **X** nicht unterbrochen. Bevorzugt ist **X** ein Methylen- oder Propylenrest.

Vorzugsweise bedeutet **A** eine NH-Gruppe.

Vorzugsweise bedeutet **Z** ein Sauerstoffatom oder eine NH-Gruppe. Vorzugsweise bedeutet **Y** einen Kohlenwasserstoffrest mit 3 bis 13 Kohlenstoffatomen, der vorzugsweise nicht substituiert ist. Vorzugsweise bedeutet **Y** einen Aralkylen-, linearen oder cyclischen Alkylen-Rest.

Vorzugsweise bedeutet **D einen** Alkylenrest mit mindestens 2, insbesondere mindestens 4 Kohlenstoffatomen und höchstens 12 Kohlenstoffatomen.
Ebenfalls vorzugsweise bedeutet **D einen** Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen. Vorzugsweise ist der Rest **D** nicht substituiert.

**n** bedeutet vorzugsweise eine Zahl von mindestens 3, insbesondere mindestens 25 und vorzugsweise höchstens 800, insbesondere höchstens 400, besonders bevorzugt höchstens 250.
Vorzugsweise bedeutet **a** eine Zahl von höchstens 50.

Wenn **b** ungleich 0, bedeutet **b** vorzugsweise eine Zahl von höchstens 50, insbesondere höchstens 25.

**c** bedeutet vorzugsweise eine Zahl von höchstens 10, insbesondere höchstens 5.

**d** bedeutet vorzugsweise eine Zahl von 10 bis 200, bevorzugt von 30 bis 100.

Als Endgruppen der Organopolysiloxan/Polyharnstoff/Polyurethan-Blockcopolymere können übliche Endgruppen nach dem Stand der Technik vorkommen, die bei der Synthese solcher Polymere standardmäßig entstehen, wie z.B. Amino- oder Isocyanat-Endgruppen. Diese können während der Synthese oder nachträglich noch mit weiteren Gruppen umgesetzt werden, wie z.B. Amino- oder Isocyanato-Silanen. Die Organopolysiloxan/Polyharnstoff/Polyurethan-Blockcopolymere enthalten daher vorzugsweise als Endgruppen B einen funktionellen oder nicht-funktionellen organischen oder siliciumorganischen Rest. Solche Endgruppen B sind beispielsweise in der oben erwähnten DE 10313936 A und DE 10326575 A beschrieben.

Als Polydiorganosiloxandiamin wird bevorzugt solches der allgemeinen Formel (2)

**H₂N-X-[SiR₂O]ₙSiR₂-X-NH₂**

wobei **R, X** und **n** die oben dafür angegebene Bedeutung haben, eingesetzt.

Vorzugsweise sind im Copolymer der allgemeinen Formel (1), bezogen auf die Summe der Urethan- und Harnstoffgruppen, mindestens 50 Mol-%, insbesondere mindestens 75 Mol-% Harnstoffgruppen enthalten.

Als Polyisocyanat wird bevorzugt ein Diisocyanat der allgemeinen Formel (3)

**OCN-Y-NCO**

wobei **Y** die oben dafür angegebene Bedeutung hat,
eingesetzt.

Beispiele für die zu verwendenden Diisocyanate der allgemeinen Formel (3) sind aliphatische Verbindungen wie Isophorondiiscyanat, Hexamethylen-1,6-diisocyanat, Tetramethylen-1,4-diisocyanat und Methylendicyclohexyl-4,4'-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylen-diisocyanat, m-Xyloldiisocyanat, Tetramethyl-m-xyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen Y ein Alkylenrest ist, da diese Copolymere mit verbesserter UV-Stabilität ergeben, was bei einer Außenanwendung der Polymere von Vorteil ist.

Vor allem durch den Einsatz von Kettenverlängerern wie Diaminoverbindungen, Dihydroxyverbindungen oder Wasser zusätzlich zu den Harnstoffgruppen kann eine deutliche Verbesserung der mechanischen Eigenschaften der Blockcopolymere erreicht werden. So können Materialien erhalten werden, die in den mechanischen Eigenschaften mit herkömmlichen Siliconkautschuken durchaus vergleichbar sind, jedoch eine erhöhte Transparenz aufweisen und in die kein zusätzlicher aktiver Füllstoff eingearbeitet werden muss.

Falls b mindestens 1 ist, können im zweiten Schritt bis zu 95 Gewichtsprozent, bezogen auf alle eingesetzten Komponenten, Kettenverlängerer ausgewählt aus der Gruppe von Diaminen, Isocyanat-geblockten Hydroxy-Verbindungen, Dihydroxy-Verbindungen und Mischungen davon, eingesetzt werden.

Vorzugsweise weisen die Kettenverlängerer die allgemeine Formel (4)

**HZ-D-ZH,**

auf, wobei **D** und **Z** die vorstehenden Bedeutungen aufweisen. Falls **Z** die Bedeutung O (Sauerstoff) hat, kann der Kettenverlängerer (4) mit Diisocyanat (3) umgesetzt werden auch vor der Umsetzung des Polydiorganosiloxandiamins (2) mit Diisocyanat (3).

Die α,ω-OH-terminierten Alkylene der allgemeinen Formel (4) sind bevorzugt Polyalkylene oder Polyoxyalkylene. Diese sind vorzugsweise weitgehend frei von Kontaminationen aus mono-, tri- oder höherfunktionellen Polyoxyalkylenen. Hierbei können Polyetherpolyole, Polytetramethylendiole, Polyesterpolyole, Polycaprolactondiole, aber auch α,ω-OH-terminierte Polyalkylene auf Basis von Polyvinylacetat, Polyvinylacetatethylencopolymere, Polyvinylchloridcopolymer, Polyisobutyldiole eingesetzt werden. Bevorzugt werden dabei Polyoxyalkyle verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mₙ bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA. Es können auch monomere α,ω-Alkylendiole, wie Ethylenglykol, Propandiol, Butandiol oder Hexandiol eingesetzt werden. Weiterhin sind als Dihydroxyverbindungen im Sinne der Erfindung auch Bishydroxyalkylsilicone zu verstehen, wie sie z.B. von der Firma Goldschmidt unter dem Namen Tegomer H-Si 2111, 2311 und 2711 vertrieben werden.

Der Wassergehalt der gemäß der vorliegenden Erfindung hergestellten Copolymere von Formel (1) liegt bevorzugt unter 1 Gew.-% und ganz besonders bevorzugt unter 0.5 Gew.-%.

Die Herstellung der oben beschriebenen Copolymere der allgemeinen Formel (1) kann sowohl in Lösung als auch in Festsubstanz, kontinuierlich oder diskontinuierlich erfolgen. Wesentlich dabei ist, dass für die gewählte Polymermischung unter den Reaktionsbedingungen eine optimale und homogene Durchmischung der Bestandteile erfolgt und eine Phasenunverträglichkeit gegebenenfalls durch Lösungsvermittler verhindert wird. Bevorzugt ist eine Synthese ohne Lösungsmittel.

Für die Reaktion ohne Lösungsmittel ist die Homogenisierung der Mischung von entscheidender Bedeutung bei der Umsetzung. Ferner kann die Polymerisation auch durch die Wahl der Reaktionsfolge bei einer Stufensynthese gesteuert werden.

Die Herstellung erfolgt vorzugsweise für eine bessere Reproduzierbarkeit generell unter Ausschluss von Feuchtigkeit und unter Schutzgas, üblicherweise Stickstoff oder Argon.

Die Umsetzung erfolgt vorzugsweise, wie bei der Herstellung von Polyurethanen üblich, durch Zugabe eines Katalysators. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin.

Das erfindungsgemäße Verfahren kann natürlich auch zum Einmischen von zusätzlichen Additiven, wie Farbpigmenten, Ölen, Weichmachern, Füllstoffen, z. B. wärme- oder elektrisch leitenden Füllstoffen, mit anschließender Granulierung genutzt werden, wodurch man noch klebfreiere Granulate erhält. Das Einmischen der zusätzlichen Stoffe erfolgt dabei vorzugsweise vor dem Verfahrensschritt (d) nach der Bildung der thermoplastischen Siloxanpolymere.

Die erfindungsgemäßen Granulate werden vorzugsweise in Spritzgussanwendungen verwendet, sie sind aber ebenso geeignet für alle anderen thermoplastischen Anwendungen (als Kunststoff-Additiv) und Verarbeitungsmethoden (wie z.B. Blasfolienextrusion, Schlauchextrusion, Folientiefziehen).

Bevorzugte Anwendungen der gemäß der vorliegenden Erfindung hergestellten Copolymer-Granulate der Polydiorganosiloxan-Harnstoff-Copolymere der allgemeinen Formel (1) sind Verwendungen als Bestandteil in Kleb- und Dichtstoffen, als Basisstoff für thermoplastische Elastomere wie beispielsweise Kabelumhüllungen, Schläuche, Dichtungen, Tastaturmatten, für Membranen (z.B. selektiv gasdurchlässige Membranen), als Zusatzstoffe in Polymerblends, oder für Beschichtungsanwendungen z.B. in Antihaftbeschichtungen, gewebeverträglichen Überzügen, flammgehemmten Überzügen und als biokompatible Materialien. Weitere Anwendungsmöglichkeiten sind Dichtstoffe, Additive für die Polymerverarbeitung, lichtleitfähige Fasern, anti-fouling Überzüge, Kosmetika, Körperpflegemittel, Lackadditive, Hilfsstoffe in Waschmitteln und Textilbearbeitung, zum Modifizieren von Harzen oder zur Bitumenmodifizierung.
Der Einsatz dieser thermoplastischen Materialien ist in vielen Anwendungen denkbar: In Dichtmassen, Klebstoffen, zur Herstellung und Veredelung von Fasern, als Kunststoffadditiv (z.B. als Schlagzähverbesserer oder Flammschutzmittel), zur Verbesserung der Blasextrusion bei Metallocen-basierenden Polyolefinen, als Material für Entschäumerformulierungen, als Hochleistungspolymer (Hochtransparenter Thermoplast, Hochtransparentes thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-, Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kathetern, Wundpflastern, Kontaktlinsen oder Infusionschläuchen, als Beschichtungsmaterial für Textilfasern oder textile Gewebe, als Beschichtungsmaterial für Naturstoffe wie z.B. Leder und Pelze, als Material für Membranen und als Material für photoaktive Systeme z.B. für lithographische Verfahren, optische Datensicherung oder optische Datenübertragung, als Additiv zur Verbesserung der Mechanischen Eigenschaften von Polymeren wie z.B. Kratzfestigkeit oder Reißfestigkeiten oder als Extrusionshilfsmittel bei der Verarbeitung von thermoplastischen Kunststoffen.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt. Die Molekularmassen wurden mittels GPC in Toluol (0,5 ml/min) bei 23 °C bestimmt(Säule: PLgel Mixed C + PLgel 100 A, Detektor: RI ERC7515).

Die mittleren Kettenlängen der eingesetzten α,ω-aminopropyl-terminierten Polydimethylsiloxane wurden mit 1H-NMR und Si-29-NMR bestimmt.

### Beispiel 1 (erfindungsgemäß) :

Die Versuche wurden mit einem 25 mm - Gleichlauf-Doppelwellenkneter ZSK 25 der Firma Coperion Werner&Pfleiderer / Stuttgart mit nachfolgend angeschlossener Unterwassergranulierung der Firma GALA/Xanten durchgeführt. Im Doppelwellenkneter wird die Polyadditionsreaktion durchgeführt, in der Granuliereinheit der Unterwassergranulierung wird die 200°C heiße Polymerschmelze kontinuierlich pelletiert, gleichzeitig auf Kühlwassertemperatur abgekühlt und anschließend in der Trocknungseinheit getrocknet:

In der ersten Heizzone des Zweiwellenkneters wurden kontinuierlich 12 kg/h α,ω-aminopropyl-terminiertes Polydimethylsiloxan mit einem mittleren Molekulargewicht von 2700 g/mol und einer Viskosität von ca. 50 -100 mPa·s eindosiert. In der zweiten Heizzone des Zweiwellenkneters wurden kontinuierlich 0,99 kg/h Isophorondiisocyanat eindosiert. Dabei wurden die Heizzonen auf einer Temperatur von 130 - 190°C gehalten. Die bei der Reaktivextrusion im Zweiwellenkneter entstandene Copolymer-Schmelze wird mit einer Temperatur von 190°C kontinuierlich in die Unterwassergranuliereinheit gefördert. Dort wurde die extrudierte Schmelze durch eine (oder mehrere parallel zueinander stehende, kreisförmig angeordnete) Düse(n) mit einem Durchmesser von 2-2,5 mm in einen gepumpten Wasserkreislauf (Wassertemperatur 25°C) eingespritzt. An der Wasserseite der Düse befand sich ein auf der Düsenoberfläche entlangschneidender schnellrotierender Messerkopf, der mit 1600 Umdrehungen den Schmelzestrang am Düsenaustritt unterwassergranulierte.

Die entstehenden Schmelzetropfen wurden mit dem KühlwasserKreislauf in die Trocknungseinheit gepumpt. Auf dem Transportweg kühlten die Schmelzetropfen an der Granulat-Oberfläche auf etwa Raumtemperatur ab.
In der Trocknungszentrifuge wurden die Granulate vom Wasser abgeschleudert und in den Vorlagebehälter gefördert.
Das abgeschleuderte Wasser gelangte zurück in den Wasserkreislauf.

Auf diese Weise erhielt man ein nahezu kugelförmiges Polymergranulat mit einer Korngröße von 3-5 mm. Der Wassergehalt des Granulats beträgt nach der Zentrifugentrocknung betrug weniger als 0,1 %.
Das Polymergranulat wurde anschließend in ein Plexiglasrohr gefüllt mit Füllhöhe 100 cm und 4 Wochen bei 30°C gelagert. Danach war das Granulat noch vollständig rieselfähig. Das Granulat konnte komplett durch einen Pulvertrichter mit einer 2 cm - Trichteröffnung geschüttet werden.

### Vergleichsversuch 1 (nicht erfindungsgemäß) :

Zum Vergleich wurde das Copolymer mit einem 25 mm- Gleichlauf-Doppelwellenkneter ZSK 25 der Firma Coperion Werner&Pfleiderer / Stuttgart mit Strangdüse, Wasserbad und Stranggranulierung hergestellt:
In der ersten Heizzone des Zweiwellenkneter wurden analog Beispiel 1 kontinuierlich α,ω-aminopropyl-terminiertes Polydimethylsiloxan mit einer Viskosität von ca. 50-100 mPa·s und in die zweite Heizzone Isophorondiisocyanat analog Beispiel 1 eindosiert. Dabei wurden die Heizzonen auf einer Temperatur von 130 - 190°C gehalten. Die bei der Reaktivextrusion im Zweiwellenkneter entstandene heiße Copolymer-Schmelze wurde mittels einer Zweiloch-Strangdüse in ein darunterliegendes Wasserbad bei einer Temperatur von 16°C geführt. Dort wurde der Schmelzestrang mit Umlenkrollen unter Wasser entlanggeführt und auf die Wassertemperatur abgekühlt, anschließend aus dem Wasserbad entnommen und abschließend in einem StrangGranulator der Fa. Rieter, Großostheim granuliert.
Man erhielt ein Strang-Granulat von zylindrischem Habitus, welches anschließend in ein Plexiglasrohr gefüllt wurde mit Füllhöhe 100 cm und dort 4 Wochen bei 30°C gelagert wurde. Danach war das Granulat völlig verblockt. Das Granulat konnte nur zu 27 Gewichtsteilen durch einen Pulvertrichter mit einer 2cm - Trichteröffnung geschüttet werden.

### Beispiel 2 (erfindungsgemäß) :

Die Versuche wurden mit einem 25 mm - Gleichlauf-Doppelwellenkneter ZSK 25 der Firma Werner&Pfleiderer / Stuttgart mit nachfolgend angeschlossener Unterwassergranulierung der Firma GALA/Xanten verwendet. Im Doppelwellenkneter wurde die Polyadditionsreaktion durchgeführt, in der Unterwassergranulierung wurde die 200°C heiße Polymerschmelze kontinuierlich in der Granuliereinheit pelletiert, gleichzeitig auf Kühlwassertemperatur abgekühlt und anschließend in der Trocknungseinheit getrocknet.
In der ersten Heizzone des Zweiwellenkneters wurden kontinuierlich 12,0 kg/h α,ω-aminopropyl-terminiertes Polydimethylsiloxan mit einer Viskosität von ca. 50 -100 mPa·s und einem mittleren Molekulargewicht von ca. 2700 g/mol eindosiert. In der zweiten Heizzone wurden kontinuierlich 1,09 kg/h 1,3-Bis(1-isocyanato-1-methylethyl)benzol (TMXDI, Tetramethyl-m-xylol-diisocyanat) der Fa. Cytec Industries B.V., USA, eindosiert. Dabei wurden die Heizzonen auf einer Temperatur von 150 - 200°C gehalten. Die bei der Reaktivextrusion im Zweiwellenkneter entstandene Copolymer-Schmelze wurden mit einer Temperatur von 200°C in die Unterwassergranuliereinheit kontinuierlich weitergefördert. Dort wurde die extrudierte Schmelze durch eine (oder mehrere parallel zueinander stehende, kreisförmig angeordnete) Düse(n) mit einem Durchmesser von 2-2,5 mm in einen gepumpten Wasserkreislauf (Wassertemperatur 25 °C) eingespritzt. An der Wasserseite der Düse befand sich ein auf der Düsenoberfläche entlangschneidender schnellrotierender Messerkopf, der mit 1600 Umdrehungen den Schmelzestrang am Düsenaustritt unterwassergranulierte.
Die so entstehenden Schmelzetropfen wurden mit dem KühlwasserKreislauf weiter in die Trocknungseinheit gepumpt. Auf dem Transportweg kühlten die Schmelzetropfen an der Oberfläche auf etwa Raumtemperatur ab.
In der Trocknungszentrifuge wurden die Granulate vom Wasser befreit und in den Vorlagebehälter gefördert.
Das abgeschleuderte Wasser gelangte zurück in den Wasserkreislauf.

Auf diese Weise erhielt man kugelförmiges Polymergranulat mit Korngröße 3-5 mm. Der Wassergehalt des Granulats betrug nach der Zentrifugentrocknung weniger als 0,1 %.
Das Polymergranulat wurde anschließend in ein Plexiglasrohr gefüllt mit Füllhöhe 100 cm und 4 Wochen bei 30°C gelagert. Danach war das Granulat noch vollständig rieselfähig. Das Granulat konnte komplett durch einen Pulvertrichter mit einer 2 cm - Trichteröffnung geschüttet werden.

### Vergleichsversuch 2 (nicht erfindungsgemäß) :

Zum Vergleich wurde das Copolymer mit einem 25 mm- Gleichlauf-Doppelwellenkneter der Zweiwellenkneter ZSK 25 der Firma Werner&Pfleiderer / Stuttgart mit Strangdüse, Wasserbad und Stranggranulierung hergestellt:
In die erste Heizzone des Zweiwellenkneter wurde das α,ω-aminopropyl-terminiertes Polydimethylsiloxan mit einer Viskosität von ca. 50-100 mPas.und in die zweite Heizzone 1,3-Bis(1-isocyanato-1-methylethyl)benzol (TMXDI, Tetramethyl-m-xyloldiisocyanat) der Fa. Cytec Industries B.V., USA, analog Beispiel 2 eindosiert. Dabei wurden die Heizzonen auf einer Temperatur von 150 - 200 °C gehalten. Die bei der Reaktivextrusion im Zweiwellenkneter entstandene heiße Copolymer-Schmelze sollte mittels der 160°C heißen Strangdüse in ein darunterliegendes Wasserbad mit einer Temperatur von 16 °C geführt werden, jedoch ließ sich kein kontinuierlicher Schmelzestrang erzeugen oder der Schmelzestrang ließ sich nicht gleichmäßig ins Wasserbad einbringen, weil die Schmelze aufgrund ihrer niedrigen Schmelz-Viskosität am Strangdüsenauslass sofort nach unten ins Wasserbad lief, ohne einen Strang zu bilden oder sehr ungleichmäßig austrat und öfter abriss wenn die Schmelzviskosität zu niedrig oder zu hoch war. Auf diese Weise konnten nach dem Wasserbad wenn überhaupt nur sehr wenig von dünnen, ungleichmäßigen Strängen erhalten werden, die im Wasserbad immer wieder abrissen und ein sehr ungleichmäßiges Granulat bildeten. Aufgrund der sehr ungenügenden Strangbildung erhielt man eine sehr geringe Ausbeute an Granulat bezogen auf die Menge der eingesetzten Rohstoffe.

### Beispiel 3:

Das in Beispiel 2 hergestellte thermoplastische Siliconelastomer-Granulat wurde mit einem 25 mm- Gleichlauf-Doppelwellenkneter der Zweiwellenkneter ZSK 25 der Firma Werner&Pfleiderer / Stuttgart mit 2 Gew.-% Russ der Fa. Degussa (Printex 60 A) abgemischt und bei einer Temperatur von 180 - 200°C extrudiert. Die bei der Reaktivextrusion im Zweiwellenkneter entstandene Copolymer-Schmelze wurde mit einer Temperatur von 200°C in die Unterwassergranuliereinheit kontinuierlich gefördert. Dort wurde die extrudierte Schmelze durch eine (oder mehrere parallel zueinander stehende, kreisförmig angeordnete) Düse(n) mit einem Durchmesser von 2-2,5 mm in einen gepumpten Wasserkreislauf (Wassertemperatur 25 °C) eingespritzt. An der Wasserseite der Düse befand sich ein auf der Düsenoberfläche entlangschneidender schnellrotierender Messerkopf, der mit 1600 Umdrehungen den Schmelzestrang am Düsenaustritt unterwassergranulierte.
Dadurch entstanden Schmelzetropfen, die mit dem KühlwasserKreislauf in die Trocknungseinheit gepumpt wurden. Auf dem Transportweg kühlten die Schmelzetropfen an der Oberfläche auf etwa Raumtemperatur ab.
In der Trocknungszentrifuge wurden die Granulate vom Wasser befreit und in den Vorlagebehälter gefördert.
Das abgeschleuderte Wasser gelangte zurück in den Wasserkreislauf.

Auf diese Weise erhielt man schwarzes, kugelförmiges Polymergranulat mit einer Korngröße von 3-5 mm. Der Wassergehalt des Granulats betrug nach der Zentrifugentrocknung unter 0,1 %.
Das Polymergranulat wurde anschließend in ein Plexiglasrohr gefüllt mit Füllhöhe 100 cm und 4 Wochen bei 30°C gelagert. Danach war das Granulat noch vollständig rieselfähig. Das Granulat konnte komplett durch einen Pulvertrichter mit einer 2 cm - Trichteröffnung geschüttet werden.

## Patentansprüche

1. Verfahren zur Herstellung von Granulaten von thermoplastischen Siloxanpolymeren durch
(d) Transportieren des thermoplastischen Siloxanpolymers, in das gegebenenfalls zuvor zusätzliche Additive eingemischt wurden, aus dem Reaktor in ein Kühlmedium mit einer Temperatur von -20°C bis 60°C und
(e) direkte Granulierung und Pelletierung des Polymers in dem Kühlmedium, gleichzeitig während oder unmittelbar nachdem das Polymer in das Kühlmedium eintritt.

2. Verfahren nach Anspruch 1, **dadurch gekennzeichnet, dass** die Granulate kugelförmig oder annähernd kugelförmig sind.

3. Verfahren nach Anspruch 1 oder 2, **dadurch gekennzeichnet, dass** Granulate von thermoplastischen Siloxanpolymeren hergestellt werden
durch
(a) Zuführen der der für die Herstellung von thermoplastischen Siloxanpolymeren erforderlichen Reaktanten zu einem Reaktor,
(b) Mischen der Reaktanten in dem Reaktor,
(c) Ermöglichen der Reaktion der Reaktanten um ein thermoplastisches Siloxanpolymer zu bilden,
(d) Transportieren des Polymers aus dem Reaktor in ein Kühlmedium mit einer Temperatur von -20°C bis 60°C und
(e) direkte Granulierung und Pelletierung des Polymers in dem Kühlmedium, gleichzeitig während oder unmittelbar nachdem das Polymer in das Kühlmedium eintritt.

4. Verfahren nach Anspruch 1 oder 2, **dadurch gekennzeichnet, dass** Granulate von Organopolysiloxan/Polyharnstoff/Polyurethan-Blockcopolymeren hergestellt werden
durch
(d) Transportieren des Organopolysiloxan/Polyharnstoff/Polyurethan-Blockcopolymers, in das gegebenenfalls zuvor zusätzliche Additive eingemischt wurden, aus dem Reaktor in ein Kühlmedium mit einer Temperatur von -20°C bis 60°C und
(e) direkte Granulierung und Pelletierung des Polymers in dem Kühlmedium, gleichzeitig während oder unmittelbar nachdem das Polymer in das Kühlmedium eintritt.

5. Verfahren nach Anspruch 4, **dadurch gekennzeichnet, dass** Granulate von Organopolysiloxan/Polyharnstoff/Polyurethan-Blockcopolymeren hergestellt werden
durch
(a) Zuführen der Reaktanten zu einem Reaktor, wobei die Reaktanten umfassen mindestens ein Polyisocyanat und mindestens ein Polyamin, wobei mindestens ein Polyamin ein Polydiorganosiloxandiamin ist,
(b) Mischen der Reaktanten in dem Reaktor,
(c) Ermöglichen der Reaktion der Reaktanten um ein Organopolysiloxan/Polyharnstoff/Polyurethan-Blockcopolymer zu bilden
(d) Transportieren des Polymers aus dem Reaktor in ein Kühlmedium mit einer Temperatur von -20°C bis 60°C und
(e) direkte Granulierung und Pelletierung des Polymers in dem Kühlmedium, gleichzeitig während oder unmittelbar nachdem das Polymer in das Kühlmedium eintritt.

6. Verfahren nach einem der Ansprüche 1 bis 5, **dadurch gekennzeichnet, dass**
(d) das Polymer aus dem Reaktor in ein Kühlmedium mit einer Temperatur von -20°C bis 60°C extrudiert wird und
(e) ohne wesentliche Ausbildung eines Stranges direkt in dem Kühlmedium eine Granulierung und Pelletierung des Polymers erfolgt (wobei unter ohne wesentliche Ausbildung eines Stranges zu verstehen ist, dass die Länge des Strangs nicht wesentlich größerer als dessen Durchmesser ist).

7. Verfahren nach einem der Ansprüche 1 bis 6, **dadurch gekennzeichnet, dass** sich an den Verfahrensschritt (e) folgende Schritte anschließen
(f) Abkühlung des Granulats in dem Kühlmedium
(g) Trennung des Granulats vom Kühlmedium und
(h) Trocknung des Granulats.

8. Verfahren nach einem der Ansprüche 1 bis 7, **dadurch gekennzeichnet, dass** das Kühlmedium Wasser oder ein Wasser/Eis-Gemisch ist.

9. Verfahren nach einem der Ansprüche 1 bis 8, **dadurch gekennzeichnet, dass** das Verfahren kontinuierlich durchgeführt wird.

10. Verfahren nach einem der Ansprüche 5 bis 9, **dadurch gekennzeichnet, dass** die Reaktanten umfassen mindestens ein Polydiisocyanat und mindestens ein Polydiorganosiloxandiamin und gegebenenfalls mindestens ein Kettenverlängerer ausgewählt aus der Gruppe der organischen Diamine, organischen Dihydroxyverbindungen und deren Mischungen,

11. Verfahren nach einem der Ansprüche 4 bis 10, **dadurch gekennzeichnet, dass** das
Organopolysiloxan/Polyharnstoff/Polyurethan-Blockcopolymeren solches enthaltend Einheiten der allgemeinen Formel (1) 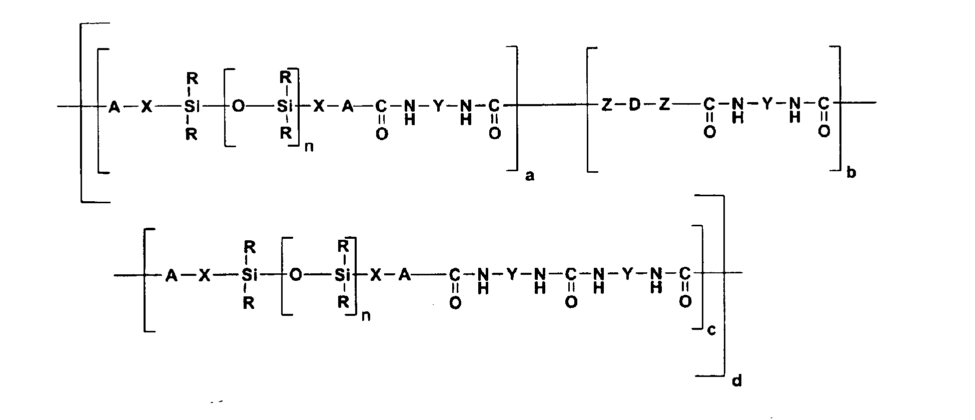 ist, wobei
**R** einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können,
**A** ein Sauerstoffatom oder eine Aminogruppe -NR'-,
**Z** ein Sauerstoffatom oder eine Aminogruppe -NR'-,
**R'** Wasserstoff oder einen Alkylrest mit 1 bis 10 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 800 Kohlenstoffatomen, in dem einander nicht benachbarte Methyleneinheiten durch Gruppen -O-, -COO-, -OCO-, oder -OCOO-, ersetzt sein können,
**n** eine Zahl von 1 bis 4000,
**a** eine Zahl von mindestens 1, <
**b** eine Zahl von 0 bis 40,
**c** eine Zahl von 0 bis 30 und
**d** eine Zahl größer 0 bedeuten.

12. Verfahren nach einem der Ansprüche 5 bis 11, **dadurch gekennzeichnet, dass** das Polydiorganosiloxandiamin solches der allgemeinen Formel (2)
**H₂N-X-[SiR₂O]ₙSiR₂-X-NH₂**
ist, wobei **R, X** und **n** die im Anspruch 11 dafür angegebene Bedeutung haben.

13. Verfahren nach einem der Ansprüche 5 bis 12, **dadurch gekennzeichnet, dass** das Polyisocyanat ein Diisocyanat der allgemeinen Formel (3)
**OCN-Y-NCO**
ist, wobei **Y** die im Anspruch 11 dafür angegebene Bedeutung hat.

14. Verfahren nach einem der Ansprüche 10 bis 13, **dadurch gekennzeichnet, dass** der Kettenverlängerer solcher der allgemeinen Formel (4)
**HZ-D-ZH,**
ist, wobei **D** und **Z** die im Anspruch 11 dafür angegebene Bedeutung haben.

15. Verfahren nach Anspruch 11 oder 12, **dadurch gekennzeichnet, dass n** eine ganze Zahl von 25 bis 250 ist und **R ein** Methylrest ist.

16. Verfahren nach Anspruch 11 oder 12, **dadurch gekennzeichnet, dass X** ein Methylen- oder Propylenrest ist.

17. Verfahren nach Anspruch 11 oder 13, **dadurch gekennzeichnet, dass Y** ein Aralkylen-Rest oder ein linearer oder cyclischer Alkylen-Rest ist.

## Claims

1. Process for production of pellets of thermoplastic siloxane polymers via
(d) transportation of the thermoplastic siloxane polymer, into which if appropriate previously additional additives have been incorporated by mixing, from the reactor into a coolant whose temperature is from -20°C to 60°C, and
(e) direct pelletization of the polymer in the coolant, simultaneously during, or immediately after, entry of the polymer into the coolant.

2. Process according to Claim 1, **characterized in that** the pellets are spherical or approximately spherical.

3. Process according to Claim 1 or 2, **characterized in that** pellets of thermoplastic siloxane polymers are produced
via
(a) introduction, into a reactor, of the reactants required for preparation of thermoplastic siloxane polymers,
(b) mixing of the reactants in the reactor,
(c) reaction of the reactants to form a thermoplastic siloxane polymer,
(d) transportation of the polymer from the reactor into a coolant whose temperature is from -20°C to 60°C, and
(e) direct pelletization of the polymer in the coolant, simultaneously during, or immediately after, entry of the polymer into the coolant.

4. Process according to Claim 1 or 2, **characterized in that** pellets of organopolysiloxane/polyurea/polyurethane block copolymers are produced
via
(d) transportation of the organopolysiloxane/polyurea/polyurethane block copolymer, into which if appropriate previously additional additives have been incorporated by mixing, from the reactor into a coolant whose temperature is from -20°C to 60°C, and
(e) direct pelletization of the polymer in the coolant, simultaneously during, or immediately after, entry of the polymer into the coolant.

5. Process according to Claim 4, **characterized in that** pellets of organopolysiloxane/polyurea/polyurethane block copolymers are produced
via
(a) introduction of the reactants into a reactor, where the reactants encompass at least one polyisocyanate and at least one polyamine, where at least one polyamine is a polydiorganosiloxanediamine,
(b) mixing of the reactants in the reactor,
(c) reaction of the reactants to form an organopolysiloxane/polyurea/polyurethane block copolymer,
(d) transportation of the polymer from the reactor into a coolant whose temperature is from -20°C to 60°C, and
(e) direct pelletization of the polymer in the coolant, simultaneously during, or immediately after, entry of the polymer into the coolant.

6. Process according to any of Claims 1 to 5, **characterized in that**
(d) the polymer is extruded from the reactor into a coolant whose temperature is from -20°C to 60°C, and
(e) without substantial formation of a strand, pelletization of the polymer takes place in the coolant (where without substantial formation of a strand means that the length of the strand is not substantially greater than its diameter).

7. Process according to any of Claims 1 to 6, **characterized in that** the following steps follow step
(e) of the process
(f) cooling of the pellets in the coolant
(g) separation of the pellets from the coolant, and
(h) drying of the pellets.

8. Process according to any of Claims 1 to 7, **characterized in that** the coolant is water or a water/ice mixture.

9. Process according to any of Claims 1 to 8, **characterized in that** the process is carried out continuously.

10. Process according to any of Claims 5 to 9, **characterized in that** the reactants encompass at least one polydiisocyanate and at least one polydiorganosiloxanediamine and if appropriate at least one chain extender selected from the group of the organic diamines, of the organic dihydroxy compounds, and of their mixtures.

11. Process according to any of Claims 4 to 10, **characterized in that** the organopolysiloxane/polyurea/polyurethane block copolymer is one containing units of the general formula (1) 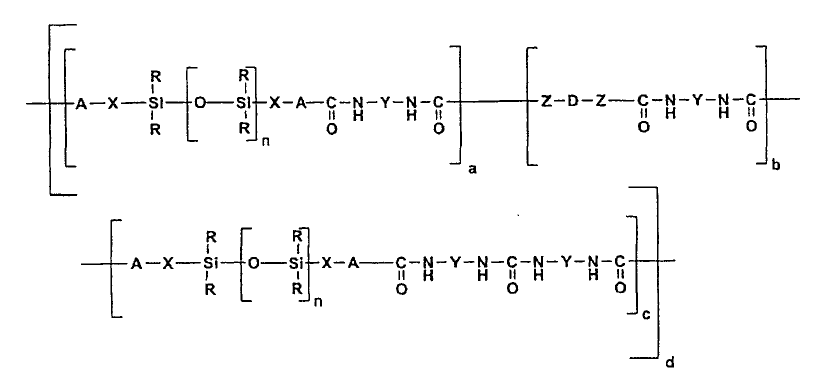 where
**R** is a monovalent, if appropriate fluorine- or chlorine-substituted hydrocarbon radical having from 1 to 20 carbon atoms,
**X** is an alkylene radical having from 1 to 20 carbon atoms, in which -O- groups can replace methylene units which are not mutually adjacent,
**A** is an oxygen atom or an amino group -NR'-,
**Z** is an oxygen atom or an amino group -NR'-,
**R'** is hydrogen or an alkyl radical having from 1 to 10 carbon atoms,
**Y** is a divalent, if appropriate fluorine- or chlorine-substituted hydrocarbon radical having from 1 to 20 carbon atoms,
**D** is an if appropriate fluorine, chlorine-, C₁-C₆-alkyl-, or C₁-C₆-alkyl-ester-substituted alkylene radical having from 1 to 800 carbon atoms, in which -O-, -COO-, -OCO-, or -OCOO- groups can replace methylene units which are not mutually adjacent,
**n** is a number from 1 to 4000,
**a** is a number which is at least 1,
**b** is a number from 0 to 40,
**c** is a number from 0 to 30, and
**d** is a number greater than 0.

12. Process according to any of Claims 5 to 11, **characterized in that** the polydiorganosiloxanediamine is one of the general formula (2)
**H₂N-X-[SiR₂O]ₙSiR₂-X-NH₂**
where **R, X,** and **n** are defined as stated in Claim 11.

13. Process according to any of Claims 5 to 12, **characterized in that** the polyisocyanate is a diisocyanate of the general formula (3)
**OCN-Y-NCO**
where **Y** is defined as stated in Claim 11.

14. Process according to any of Claims 10 to 13, **characterized in that** the chain extender is one of the general formula (4)
**HZ-D-ZH**
where **D** and **Z** are defined as stated in Claim 11.

15. Process according to Claim 11 or 12, **characterized in that n** is a whole number from 25 to 250, and **R** is a methyl radical.

16. Process according to Claim 11 or 12, **characterized in that X** is a methylene radical or propylene radical.

17. Process according to Claim 11 or 13, **characterized in that Y** is an aralkylene radical or a linear or cyclic alkylene radical.

## Revendications

1. Procédé pour la préparation de granulats de polymères thermoplastiques de siloxane par
(d) transport du polymère thermoplastique de siloxane, dans lequel on a le cas échéant mélangé au préalable des additifs supplémentaires, hors du réacteur dans un milieu de refroidissement à une température de -20°C à 60°C et
(e) granulation et pelletisation directe du polymère dans le milieu de refroidissement, simultanément pendant ou directement après l'entrée du polymère dans le milieu de refroidissement.

2. Procédé selon la revendication 1, **caractérisé en ce que** les granulats sont sphériques ou quasiment sphériques.

3. Procédé selon la revendication 1 ou 2, **caractérisé en ce qu'**on prépare des granulats de polymères thermoplastiques de siloxane, par
(a) alimentation dans un réacteur des réactifs nécessaires pour la production de polymères thermoplastiques de siloxane,
(b) mélange des réactifs dans le réacteur,
(c) déroulement de la réaction des réactifs pour former un polymère thermoplastique de siloxane,
(d) transport du polymère hors du réacteur dans un milieu de refroidissement à une température de -20°C à 60°C et
(e) granulation et pelletisation directe du polymère dans le milieu de refroidissement, simultanément pendant ou directement après l'entrée du polymère dans le milieu de refroidissement.

4. Procédé selon la revendication 1 ou 2, **caractérisé en ce qu'**on prépare des granulats de copolymères à blocs d'organopolysiloxane/polyurée/polyuréthane, par
(d) transport du copolymère à blocs d'organopolysiloxane/polyurée/polyuréthane, dans lequel on a le cas échéant mélangé au préalable des additifs supplémentaires, hors du réacteur dans un milieu de refroidissement à une température de -20°C à 60°C et
(e) granulation et pelletisation directe du polymère dans le milieu de refroidissement, simultanément pendant ou directement après l'entrée du polymère dans le milieu de refroidissement.

5. Procédé selon la revendication 4, **caractérisé en ce qu'**on prépare des granulats de copolymères à blocs d'organopolysiloxane/polyurée/polyuréthane, par
(a) alimentation des réactifs dans un réacteur, les réactifs comprenant au moins un polyisocyanate et au moins une polyamine, au moins une polyamine étant une polydiorganosiloxanediamine,
(b) mélange des réactifs dans le réacteur,
(c) déroulement de la réaction des réactifs pour former un copolymère à blocs d'organopolysiloxane/polyurée/polyuréthane,
(d) transport du polymère hors du réacteur dans un milieu de refroidissement à une température de -20°C à 60°C et
(e) granulation et pelletisation directe du polymère dans le milieu de refroidissement, simultanément pendant ou directement après l'entrée du polymère dans le milieu de refroidissement.

6. Procédé selon l'une quelconque des revendications 1 à 5, **caractérisé en ce que**
(d) le polymère est extrudé hors du réacteur dans un milieu de refroidissement à une température de -20°C à 60°C et
(e) le polymère est granulé et pelletisé directement dans le milieu de refroidissement sans formation essentielle d'un brin (où "sans formation essentielle d'un brin" signifie que la longueur du brin n'est pas essentiellement supérieure à son diamètre).

7. Procédé selon l'une quelconque des revendications 1 à 6, **caractérisé en ce que** l'étape de procédé (e) est suivie des étapes suivantes
(f) refroidissement du granulat dans le milieu de refroidissement
(g) séparation du granulat du milieu de refroidissement et
(h) séchage du granulat.

8. Procédé selon l'une quelconque des revendications 1 à 7, **caractérisé en ce que** le milieu de refroidissement est de l'eau ou un mélange eau/glace.

9. Procédé selon l'une quelconque des revendications 1 à 8, **caractérisé en ce que** le procédé est réalisé en continu.

10. Procédé selon l'une quelconque des revendications 5 à 9, **caractérisé en ce que** les réactifs comprennent au moins un polydiisocyanate et au moins une polydiorganosiloxanediamine et le cas échéant au moins un agent d'allongement de chaîne choisi dans le groupe des diamines organiques, des composés dihydroxy organiques et leurs mélanges.

11. Procédé selon l'une quelconque des revendications 4 à 10, **caractérisé en ce que** le copolymère à blocs d'organopolysiloxane/polyurée/polyuréthane est un copolymère contenant des unités de formule générale (1) 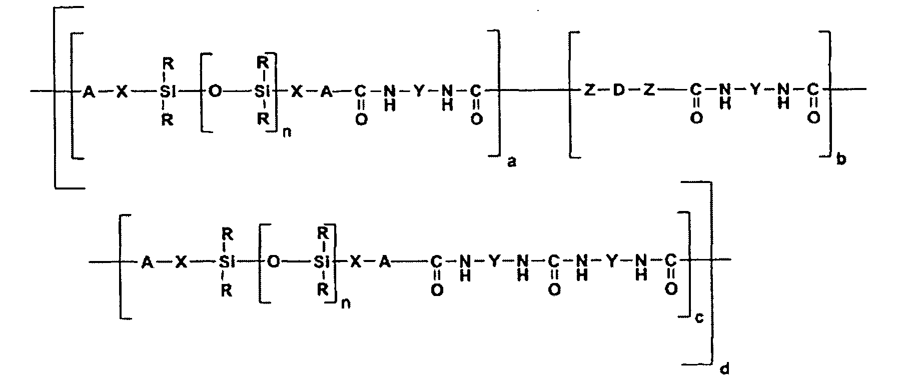 dans laquelle
R signifie un radical hydrocarboné monovalent, le cas échéant substitué par fluor ou chlore comprenant 1 à 20 atomes de carbone,
X signifie un radical alkylène comprenant 1 à 20 atomes de carbone, dans lequel des unités méthylène non adjacentes peuvent être remplacées par des groupes -O-,
A signifie un atome d'oxygène ou un groupe amino -NR'-,
Z signifie un atome d'oxygène ou un groupe amino -NR'-,
R' signifie un atome d'hydrogène ou un radical alkyle comprenant 1 à 10 atomes de carbone,
Y signifie un radical hydrocarboné divalent, le cas échéant substitué par fluor ou chlore comprenant 1 à 20 atomes de carbone,
D signifie un radical alkylène le cas échéant substitué par fluor, chlore, C₁-C₆-alkyle ou ester de C₁-C₆-alkyle comprenant 1 à 800 atomes de carbone, dans lequel des unités méthylène non adjacentes peuvent être remplacées par des groupements -O-, -COO-, -OCO ou -OCOO-
n représente un nombre de 1 à 4000,
a représente un nombre d'au moins 1,
b représente un nombre de 0 à 40,
c représente un nombre de 0 à 30 et
d représente un nombre supérieur à 0.

12. Procédé selon l'une quelconque des revendications 5 à 11, **caractérisé en ce que** la polydiorganosiloxanediamine est une polydiorganosiloxanediamine de formule générale (2)
H₂N-X-[SiR₂O]ₙSiR₂-X-NH₂
où R, X et n ont la signification indiquée dans la revendication 11.

13. Procédé selon l'une quelconque des revendications 5 à 12, **caractérisé en ce que** le polyisocyanate est un diisocyanate de formule générale (3)
OCN-Y-NCO
où Y a la signification indiquée dans la revendication 11.

14. Procédé selon l'une quelconque des revendications 10 à 13, **caractérisé en ce que** l'agent d'allongement de chaîne est une polydiorganosiloxanediamine de formule générale (4)
HZ-D-ZH,
où D et Z ont la signification indiquée dans la revendication 11.

15. Procédé selon la revendication 11 ou 12, **caractérisé en ce que** n représente un nombre entier de 25 à 250 et R représente un radical méthyle.

16. Procédé selon la revendication 11 ou 12, **caractérisé en ce que** X est un radical méthylène ou propylène.

17. Procédé selon la revendication 11 ou 13, **caractérisé en ce que** Y est un radical aralkylène ou un radical alkylène linéaire ou cyclique.
